Europäisches Patentamt

European Patent Office    (11) Publication number: **0 392 130**

Office européen des brevets    **A1**

## (12) EUROPEAN PATENT APPLICATION

(21) Application number: 89830162.7    (51) Int. Cl.⁵: **B64G 1/28, G01C 21/18**

(22) Date of filing: 11.04.89

(43) Date of publication of application:
**17.10.90 Bulletin 90/42**

(84) Designated Contracting States:
**AT BE CH DE ES FR GB IT LI NL SE**

(71) Applicant: **CONTRAVES ITALIANA S.p.A.**
**Via Affile 102**
**I-00131 Roma(IT)**

(72) Inventor: **Stella, Domenico**
**Via Sorelle Tetrazzini 47/C**
**I-00139 Roma(IT)**
Inventor: **Greco, Emilio**
**Via Enrico di San Martino Val Perga 67**
**I-00149 Roma(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) **Attitude control actuator, particularly for spacecraft.**

㊼ Two flywheels (F1, F2) are driven by respective motors (M1, M2) with opposite and equal spins, which are supported by gimbals (G1, G2). The gimbals are journaled in a frame (S), rigidly connected with the spacecraft, about respective parallel axes at right angles to the axes of the flywheels. Motor means (MG, TG, TF, T1, T2) are mounted on the frame for rotating the gimbals through desired angular displacements about their journal axes.

Fig.1

EP 0 392 130 A1

## Attitude control actuator, particularly for spacecraft

### BACKGROUND OF THE INVENTION

Several types of actuator have been used in spacecrafts for attitude control: jet motors, torue generators from magnetic fields or from gravity gradient, etc. However, for strong torque generation there are only two actuators currently available: jet motors plus inertial flywheels, and double-gimballed flywheels.

The above actuators suffer, however, from several drawbacks:

(1) jet motor systems have the problem of thrust modulation, which, at the present state of the art, gives rise to limit cycles;

(2) the inertial flywheel maintains a fixed direction in which the spacecraft can be bound: a reaction torque can be generated in order to turn the spacecraft towards the prescribed direction by changing the wheel spin velocity, but it is well known that this implies a saturation phenomenon, and that the value of the maximum available torque is quite low (0.1 to 1 Nm);

(3) the double-gimballed flywheel is a very good actuator because the wheel has a constant spin velocity and, by turning the wheel axis, it generates very strong torques at right angles to the plane containing the turning; however, here the plane of the torque rotates together with the axis, so that the control of this device requires complex calculations, which overload the attitude control computer memory and increase the computation time.

### SUMMARY OF THE INVENTION

Accordingly, the main object of this invention is to provide an attitude actuator device for spacecrafts which is capable of generating operating torques in any direction in order to control the spacecraft attitude only by using the power collected by solar panels (or generated by batteries, before the panels are deployed).

The above object, together with other objects and advantages, such as will appear from the following disclosure, are achieved by invention with an attitude control actuator for spacecraft, comprising:

a) a frame rigidly connected with the spacecraft;

b) two flywheels driven by respective motors with opposite and equal spins, and supported by gimbals journaled on the frame about respective parallel axes lying at right angles to the axes of the flywheels; and

c) motor means for rotating the gimbals through desired angular displacements about their journal axes.

### BRIEF DESCRIPTION OF THE DRAWINGS

The invention will be further described with refernce to a preferred embodiment, shown in the attached drawings, wherein:

Fig. 1 shows the actuator in a rest, or stand-by position, with the capability of generating a torque in the Y direction; and

Fig. 2 shows the same actuator, in a position of torque generation.

### DETAILED DESCRIPTION OF A PREFERRED EMBODIMENT

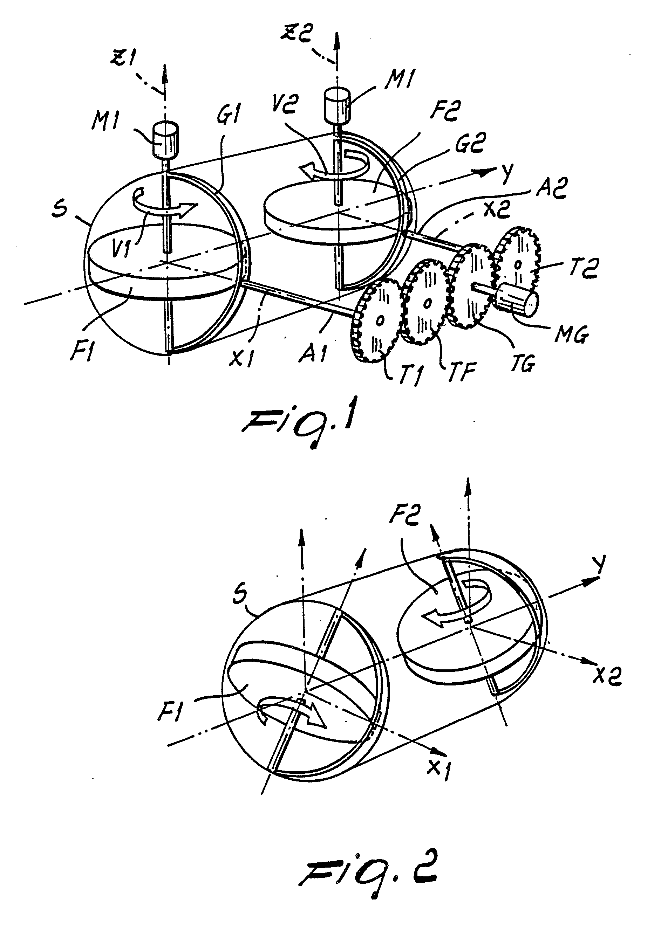

The basic configuration of the actuator is shown on Fig. 1, and comprises two identical flywheels F1 and F2, supported on respective gimbals G1 and G2, and driven by respective motors M1 and M2, mounted on the respective gimbals, to spin with constant angular velocities which are equal in magnitude and opposite in direction, around spin axes Z1 and Z2, as shown by arrows V1 and V2 on Fig. 1.

Gimbals G1 and G2 have respective shafts A1 and A2 which are journaled in a frame S, and whose axes X1 and X2 are parallel to each other and at right angles to the spinning axes Z1 and Z2 of the flywheels. Frame S is rigid with a spacecraft (not shown).

A motor MG mounted on frame S carries a gear TG meshing on the one hand with a gear T2 keyed on shaft A2 of gimbal G2, and, on the other hand, with an idle gear TF, which in its turn meshes with a further gear T1 keyed on shaft A1 of gimbal G1, all gears being of equal size. Therefore, when motor MG is operated, gimbals G1 and G2 rotate about their respective axes through angular displacements which are equal in magnitude and opposite in direction.

A common axis Y is defined as lying in a plane defined by spin axes Z1 and Z2 and being at right angles to axes X1 and X2.

When frame S (i.e., the spacecraft) is rotated about any arbitrary axis while spinning flywheels are in their rest positions shown in Fig. 1, the only reaction opposed by the system to external forces is the one due to its total inertia, which is the same as if the two flywheels were stationary.

However, with reference to Fig. 2, if motor MG is now operated to turn the gimbals G1 and G2 through a desired angular displacement, an external torque is generated. This effect will now be explained.

The fundamental equation for the rotation of a rigid body about a stationary axis with respect to an inertial frame is:

$$\frac{d\vec{J}}{dt} = \vec{M} \qquad (1)$$

where:
$\vec{J}$ is the angular momentum (spin) of the body; and
$\vec{M}$ is the applied torque.

In a frame rotating with angular velocity $\omega$, the fundamental equation (1) becomes:

$$\frac{d\vec{J}}{dt} + \vec{\omega} \times \vec{J} = \vec{M}, \qquad (2)$$

and in this form it applies to each flywheel under examination.

When equation (2) is applied to both flywheels F1 and F2 in the unit of Fig. 1, it can be seen that a net torque is produced by the system, which is directed along axis Y, and has a magnitude:

$|M| = 2\omega_x H_g \cos(\omega_x t)$
where
$\omega_x$ is the angular velocity of each flywheel axis about the X axis;
$H_g$ is the angular momentum (spin) of each flywheel.

Such torque causes frame S to rotate about axis Y with angular acceleration:

$$\dot{\omega}_s(t) = \frac{2\,\omega_x\,H_g\,\cos(\omega_x t)}{I} \qquad (3)$$

where I is the moment of inertia of frame S.

If the axes of the flywheels rotate according to an arbitrary law $\beta(t)$, the above equation (3) yields:

$$\dot{\omega}_s(t) = \frac{2\,\omega_x(t)\,H_\ell\,\cos\beta(t)}{I}$$

and by integration:

$$\omega_s(t) = \frac{2\,H_\ell}{I}\,\sin\beta(t).$$

The angular velocity of frame S thus depends only on the position $\beta(t)$ of the axes of the flywheels, i.e. on their angle of rotation, and consequently it can be adjusted similarly to any conventional control system.

When the rotation of the axes of the flywheels is stopped, the torque vanishes, and frame S can be stopped by bringing back the axes of the flywheels to their initial or rest positions.

Although in the preferred embodiment motor means are provided for rotating the gimbals only about axes X1 and X2, it must be emphasized that the same concept could be applied, for example, for rotating the flywheel axes about axis Y, so that a torque along the axes X would be obtained. More generally, the inventive concept can be adapted to produce a torque along any direction.

Compared to conventional attitude control actuators, it can be seen that the above-described device offers several important advantages, some of which were listed above. In particular, the total angular momentum of the two flywheels is 100% available, in contrast to only 25% availability of conventional actuators; a stronger torque can therefore be generated with the same mass.

The device described above finds application in several areas:
- In nutation control of spinning spacecrafts turning around axes of low moment of inertia; since a sinusoidal torque can be applied there is no drift in the spacecraft momentum.
- In docking, by concurrent use of a jet set; this should only be used for displacement of the centre of mass.
- In accurate pointing of optical devices such as telescopes, antennas, etc., due to the high resolution of the device when used in a servo loop.
- In accurate track control in interplanetary missions like Giotto.

A preferred embodiment has been described above in which the gimbals are angularly displaced by one motor via a twofold gear transmission with one idle gear, but other mechanisms could be used, such as bevel gears, belts or the like, or two motors turning in opposite directions could drive each gimbal by direct transmission. These and other changes to the above-described embodiment should be regarded as part of the inventive concept.

## Claims

1. An attitude control actuator for spacecraft, comprising:
   a) a frame (S) rigidly connected with the spacecraft;
   b) two flywheels (F1, F2) driven by respective motors (M1, M2) with opposite and equal spins, and supported by gimbals (G1, G2) journaled on the frame about respective parallel axes at right angles to the axes of the flywheels; and
   c) motor means (MG, TG, TF, T1, T2) for rotating the gimbals through desired angular displacements about their journal axes.

2. The attitude actuator of Claim 1, wherein the flywheels are identical.

3. The attitude actuator of Claim 2, wherein the angular displacements are equal in magnitude and opposite direction.

4. The attitude actuator of Claim 3, wherein the motor means comprises one motor and respective transmissions to each of the gimbals.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 439 548  (HORVATH) <br> * Whole document * <br> --- | 1 | B 64 G    1/28 <br> G 01 C   21/18 |
| A | US-A-4 688 746  (COOPER) <br> * Claim 6 * <br> ----- | 1 | |

**TECHNICAL FIELDS SEARCHED (Int. Cl.5)**

B 64 G
G 01 C

The present search report has been drawn up for all claims

| Place of search | Date of completion of the search | Examiner |
|---|---|---|
| THE HAGUE | 11-12-1989 | HAUGLUSTAINE H.P.M. |